# EUROPÄISCHE PATENTSCHRIFT

(11) **EP 4 065 432 B1**
(45) Veröffentlichungstag und Bekanntmachung des Hinweises auf die Patenterteilung: **28.01.2026**
(21) Anmeldenummer: 20803475.1
(22) Anmeldetag: 05.11.2020
(51) Int. Cl.: B60S 1/38

(54) **WISCHBLATT, INSBESONDERE FÜR EIN KRAFTFAHRZEUG**
WIPER BLADE, IN PARTICULAR FOR A MOTOR VEHICLE
BALAI D'ESSUIE-GLACE, EN PARTICULIER POUR UN VÉHICULE AUTOMOBILE

(30) Priorität: 29.11.2019 DE 102019218529
(43) Veröffentlichungstag der Anmeldung: 05.10.2022
(73) Patentinhaber: Robert Bosch GmbH, 70442 Stuttgart (DE)
(72) Erfinder: ATHANASSOULIS-MAKRIS, George, 3140 Keerbergen (BE); DEPONDT, Helmut, 3370 Boutersem (BE); APPALSAWMY, Jesheena, 3140 Keerbergen (BE)
(86) Internationale Anmeldenummer: PCT/EP2020/081045
(87) Internationale Veröffentlichungsnummer: WO 2021/104822

(56) Entgegenhaltungen:
- EP-A1- 2 821 299
- EP-A1- 2 910 438
- WO-A1-2010/044768
- DE-A1- 10 234 267
- DE-U1- 20 210 288
- US-A- 3 619 556
- US-A1- 2008 150 193
- US-A1- 2013 192 017
- US-A1- 2014 352 096

## Beschreibung

### Stand der Technik

Die Erfindung betrifft ein Wischblatt, insbesondere für ein Kraftfahrzeug, nach Gattung des unabhängigen Anspruchs.

Es sind schon zahlreiche Wischblätter für Kraftfahrzeuge bekannt, die eine Heizeinrichtung aufweisen. Bspw. ist es aus der DE 10 2005 032 698 A1 bekannt einen Heizdraht in einem äußeren Hohlraum des Scheibenwischergummis anzuordnen. Derartige Wischblätter benötigen jedoch relativ viel Energie bei der Beheizung, was aus ökologischen und ökonomischen Gesichtspunkten problematisch ist.

Weiterer Stand der Technik ist aus der US 3 619 556 A, der US 2013/192017 A1 und der DE 202 10 288 U1 bekannt.

### Offenbarung der Erfindung

### Vorteile der Erfindung

Das erfindungsgemäße Wischblatt mit den Merkmalen des Hauptanspruchs hat den Vorteil, dass ein Isolierelement zur Wärmeisolation vorgesehen ist. Auf diese Weise wird die zum Beheizen notwendige Energie reduziert. Erfindungsgemäß weist das Isolierelement mindestens eine Luftkammer auf oder bildet eine solche aus und ist auf einer der Wischlippe abgewandten Oberseite des Befestigungsbereichs der Wischleiste angeordnet, da die Wärmeeintragung besonders im Bereich der Wischlippe erforderlich ist.

Erfindungsgemäß weist die Wischleiste einen Befestigungsbereich und eine Wischlippe auf, die über einen Kippsteg verbunden sind. Auf diese Weise wird eine gute Reinigungsleistung erzielt.

Durch den in den Unteransprüchen aufgeführten Maßnahmen ergeben sich vorteilhafte Weiterbildungen und Verbesserungen der im Hauptanspruch angegebene Merkmale.

Hierbei ist es besonders vorteilhaft, wenn das Isolierelement im Querschnitt den Befestigungsbereich und zumindest teilweise die Wischlippe isoliert. Auf diese Weise wird eine hohe Energieeinsparung verwirklicht.

Zur Erzielung eines guten Wischergebnisses ist vorteilhafterweise die Wischleiste an einer Federschiene befestigt.

Eine besonders einfach und kostengünstige Beheizung des Wischblatts ist vorteilhafterweise dadurch verwirklicht, dass die Federschiene durch die Heizeinrichtung beheizt ist.

Ebenso ist es als vorteilhaft anzusehen, wenn der Befestigungsbereich der Wischleiste durch die Heizeinrichtung beheizt ist.

Besonders vorteilhaft ist dabei, wenn das Isolierelement mehrschalig ausgebildet ist, um eine besonders gute Wärmeisolation zu erzeugen.

### Zeichnungen

Verschiedene Ausführungsbeispiele der Erfindung sind in den Zeichnungen dargestellt und in der nachfolgenden Beschreibung näher erläutert. Es zeigen:
- Figur 1: ein Wischblatt nach dem Stand der Technik in einer Extrusionsdarstellung,
- Figur 2: einen Querschnitt durch ein erfindungsgemäßes Wischblatt in schematischer Darstellung und
- Figuren 3 bis 8: Variationen eines erfindungsgemäßen Wischblatts in einer schematischen Querschnittsdarstellung, wobei die Figuren 3 bis 6 nur der Erläuterung dienen und nicht Teil der Erfindung sind.

### Beschreibung der Ausführungsbeispiele

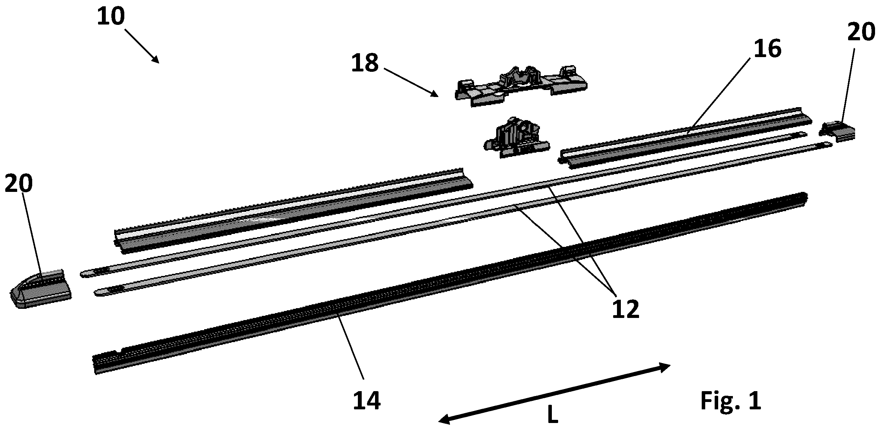

In Figur 1 ist ein Wischblatt 10 nach dem Stand der Technik gezeigt. In den folgenden Figuren ist dann ein erfindungsgemäßes Wischblatt 10 gezeigt, welches die erfindungsgemäßen Änderungen aufzeigt.

Das Wischblatt 10 weist eine zweiteilige Federschiene 12, eine Wischleiste 14, eine Windabweisleiste 16 sowie ein Befestigungsmittel 18 auf. Entlang einer Längserstreckung (L) ist das Wischblatt 10 an den Enden durch jeweils eine Endkappe 20 abgeschlossen. Das Befestigungsmittel 18 dient der Befestigung des Wischblatts 10 an einem hier der Übersichtlichkeit halber nicht gezeichneten Wischerarm. Die Wischleiste 14 ist auf der dem Befestigungsmittel 18 abgewandten Seite der Federschiene 12 angeordnet. Diese Seite wird folgend als Unterseite bezeichnet. Die dem Befestigungsmittel 18 zugewandte Seite der Federschiene 12 wird im Folgenden als Oberseite bezeichnet. Auf dieser Oberseite ist die Windabweisleiste 16 angeordnet und an der Federschiene 12 befestigt.

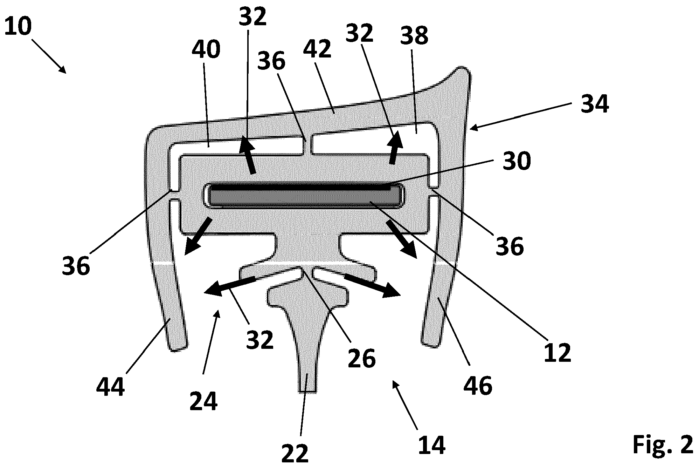

In Figur 2 ist ein Querschnitt durch ein erfindungsgemäßes Wischblatt 10 gezeigt. Die Wischleiste 14 weist eine Wischlippe 22 und einem Befestigungsbereich 24 auf. Der Befestigungsbereich 24 dient der Befestigung der Wischleiste 14 an der Federschiene 12. Die Wischlippe 22 ist mittels eines Kippstegs 26 am Befestigungsbereich 24 befestigt. Die Federschiene 12 ist innerhalb des Befestigungsbereichs 24 geführt und weist eine Heizeinrichtung 30, die an der Oberseite, also an der der Wischlippe 22 angewandten Seite der Federschiene 12 angeordnet ist. Diese Heizeinrichtung 30 beheizt dadurch zunächst die Federschiene 12 und damit den Befestigungsbereich 24 sowie die Wischlippe 22. Die dadurch entstehende Heizstrahlung wird durch die Strahlungspfeile 34 dargestellt. Der Befestigungsbereich 34 und mithin die Federschiene 12 sind von einem Isolierelement 34 umhüllt, das sich in Richtung der Wischlippe 22 umgekehrt U-förmig erstreckt. Das Isolierelement 34 ist am Befestigungsbereich 24 befestigt. Hierzu sind drei Haltebrücken 36 vorgesehen, jedoch kann die Befestigung auch durch andere Halteeinrichtungen erfolgen.

Durch den Abstand, den das Isolierelement 34 vom Befestigungsbereich 24 durch die Haltebrücke 36 einnimmt, ist zumindest eine Luftkammer 38 gebildet, die die Wärmeisolierung des Befestigungsbereichs 24 weiter verstärkt. Hier ist noch eine zweite Luftkammer 40 ausgebildet. In einer Variation kann die Luftkammer 38 und/oder die zweite Luftkammer 40 auch innerhalb des Isolierelements 34 angeordnet sein.

Das Isolierelement 34 weist im Querschnitt, wie oben bereits beschrieben, eine etwa umgekehrt U-förmige Struktur auf. Dadurch ist eine Basis 42 ausgebildet an deren Enden eine Schürze 44 und eine weitere Schürze 46 angeordnet sind. Die Schürze 44 und die weitere Schürze 46 reichen dabei, ausgehend vom Befestigungsbereich 24, bis über den Kippsteg 26 in den Bereich der Wischlippe 22 herab. In einer Variation der Erfindung kann auch lediglich die Schürze 44 bis zur Wischlippe 22 herabreichen und die weitere Schürze 46 entsprechend kürzer ausgebildet sein. Die Basis 42 bildet gleichzeitig die Windabweisleiste 16 (Figur 1) und ist daher im Querschnitt schräg ausgebildet.

Bei dem hier gezeigten Ausführungsbeispiel ist die Wischleiste 14 mit der Wischlippe 22, dem Kippsteg 26 und dem Befestigungsbereich 24 einstückig mit den Haltebrücken 36 und dem Isolierelement 34 ausgebildet. Dies kann bspw. in einfacher Weise durch ein Extrudierverfahren erzielt werden.

Die Heizeinrichtung 30 ist hier als Heizfolie ausgebildet, die auf die Federschiene 12 aufgebracht ist. hier sind jedoch auch andere Ausbildungen, beispielsweise eingebrachte Heizdrähte, möglich.

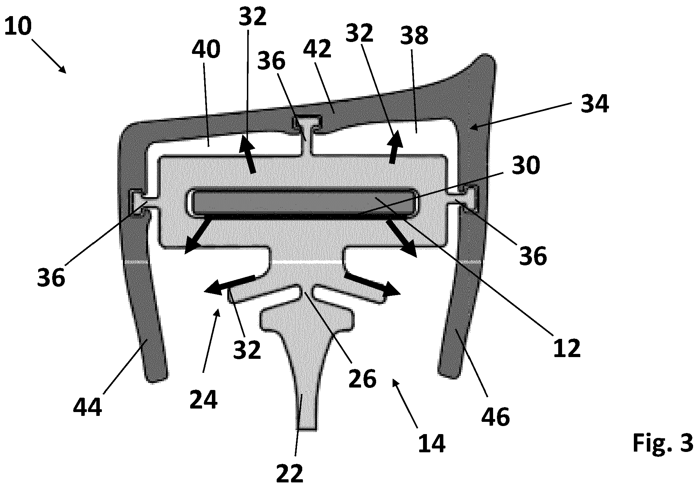

In Figur 3 ist eine Variation des in Figur 2 gezeigten Wischblatts dargestellt. Sämtliche Erläuterungen und Bezugszeichen aus Figur 2 gelten auch für Figur 3. Um Wiederholungen zu vermeiden werden hier nur die Unterschiede zu der Ausbildung aus Figur 2 erläutert.

Die Haltebrücken 36 sind hierbei einstückig mit dem Befestigungsbereich 24 der Wischleiste 14 ausgebildet. Am freien, dem Befestigungsbereich 24 abgewandten Ende weisen die Haltebrücken 36 Formschlusselemente auf, die mit Gegenformschlusselementen des Isolierelements 34 zusammenwirken, so dass eine sichere Befestigung des Isolierelements 34 am Befestigungsbereich 24 der Wischleiste 14 gewährleistet ist. Die in Figur 3 gezeigte Ausbildung unterscheidet sich also von der in Figur 2 gezeigten Ausbildung lediglich dadurch, dass das Isolierelement 34 durch eine Formschlussverbindung an der Wischleiste 14 befestigt ist, während in Figur 2 eine einstückige Ausbildung von Isolierelement 34, Haltebrücken 36 und Befestigungsbereich 24 gezeigt ist.

Darüber hinaus, jedoch völlig unabhängig von der Ausbildung des Isolierelements 34, ist das Heizelement 30 hier auf der Unterseite der Federschiene 12, die der Wischlippe 22 zugewandt ist, angeordnet. Selbstverständlich kann wie im vorangegangenen Ausführungsbeispiel, auch bei der Verwendung von Formschlusselementen zur Befestigung des Isolierelements 34, auch das Heizelement 30 auf der Oberseite der Federschiene 12 angeordnet sein. Die Formschlusselemente sind hierbei T-förmig ausgebildet. In einer Variation der Erfindung können die Formschlusselemente jedoch aus eine andere, einen geeigneten Hinterschnitt erzeugende Form aufweisen.

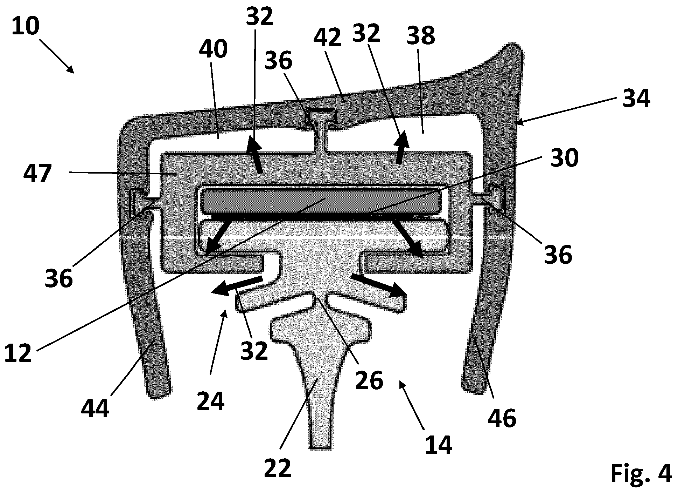

In Figur 4 ist eine weitere Variation des erfindungsgemäßen Wischblatts 10 gezeigt. Das erfindungsgemäße Wischblatt 10 weist hierbei eine Zwischenschiene 47 auf. Die Zwischenschiene 47 haltert die Federschiene 12 und den Befestigungsbereich 24 der Wischleiste 14. Hierzu umhüllt die Zwischenschiene 47 die Federschiene 12, das Heizelement 30 und teilweise den Befestigungsbereich 24 der Wischleiste 14. Das Heizelement 30 ist hier auf der Unterseite der Federschiene 12 und auf der, der Federschiene 12 zugewandten Seite des Befestigungsbereichs 24 angeordnet. Anders formuliert ist das Heizelement 30 zwischen der Federschiene 12 und dem Befestigungsbereich 24 der Wischleiste 14 angeordnet. Die Zwischenschiene 47 weist dann die Haltebrücken 36 auf, die das Isolierelement 34 haltern. Hierzu weisen die Haltebrücken 36, wie im Ausführungsbeispiel aus Figur 3, Formschlusselemente auf, die mit Gegenschlusselementen des Isolierelements 34 zusammenwirken. Um Wiederholungen zu vermeiden wird bzgl. der übrigen Elemente auch die vorangegangenen Ausführungsbeispiele, insbesondere das in Figur 2 gezeigte, verwiesen.

Auf der Oberseite, also der der Wischlippe 22 abgewandten Seite ist auch hier die Luftkammer 38 sowie die zweite Luftkammer 40 gebildet um die Wärmeisolation nach oben zu verbessern und möglichst die gesamte, durch das Heizelement 30 erzeugte Wärme in Richtung der Wischlippe 22, die in Betrieb auf der Scheibe aufliegt, zu lenken. In einer Variation der Erfindung kann das Isolierelement 34 auch einstückig mit den Haltebrücken 36 ausgebildet sein und diese bspw. am Befestigungsbereich 24 der Wischleiste 14 oder der Zwischenschiene 47 angeklebt sein, oder auch an dieser Stelle durch Formschlusselemente gehaltert sein.

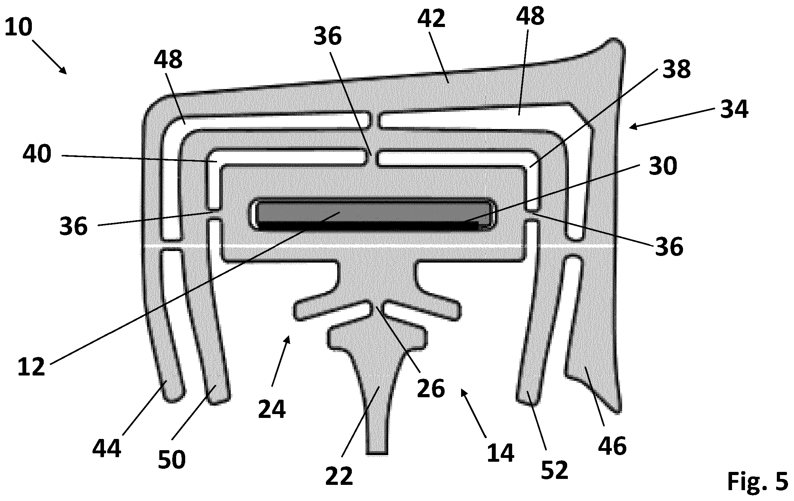

In Figur 5 ist eine weitere Variation eines erfindungsgemäßen Wischblatts 10 gezeigt. Grundsätzlich ist das Wischblatt 10 in diesem Ausführungsbeispiel aufgebaut wie das in Figur 2 gezeigte, jedoch ist das Isolierelement 34 hier zweischalig aufgebaut. Dadurch entstehen Zusatzluftkammern 48 im Inneren des Isolierelements 34. In einer Variation der Erfindung können sowohl die Luftkammer 40, als auch die Zusatzluftkammern 48, jeweils einzeln oder in ihrer Gesamtheit mit einem Isoliergas gefüllt werden. Ebenso können die auch evakuiert, also ohne Luft- oder Gasfüllung ausgebildet sein.

Wie im Ausführungsbeispiel vom Figur 2 bereits gezeigt, weist auch das Ausführungsbeispiel in Figur 5 die Federschiene 12 auf, die vom Befestigungsbereich 24 der Wischleiste 14 umhüllt wird. Auf der der Wischlippe 22 zugewandten Unterseite der Federschiene 12 ist das Heizelement 30 angeordnet. Am Befestigungsbereich 24 der die Federschiene 12 und das Heizelement 30 umhüllt sind die Haltebrücken 36 angeordnet, die das Isolierelement 34 tragen. Hier ist das Isolierelement 34 einstückig mit der Wischleiste 14 ausgebildet. In einer Variation kann jedoch auch eine mehrteilige Ausbildung wie bspw. in Figur 4 gezeigt, auch bei einem wie hier gezeigten mehrschaligen Isolierelement 34 vorgesehen sein. Durch die mehrschalige Ausbildung des Isolierelements 34 ergeben sich somit die Zusatzluftkammern 48, die im oberen, die Basis 42 des Isolierelements 34 bildenden Bereich angeordnet sind. Weiterhin ergibt sich eine Innenschürze 50, die im Wesentlichen parallel zur Schürze 44 verläuft. Entsprechend ergibt sich eine weitere Innenschürze 52 die parallel zur weiteren Schürze 46 verläuft. In einer Variation der Erfindung kann auf die Innenschürze 50 und/oder die weitere innenschürze 52 auch verzichtet werden, so dass lediglich auf der Oberseite die Zusatzluftkammern 48 ausgebildet sind.

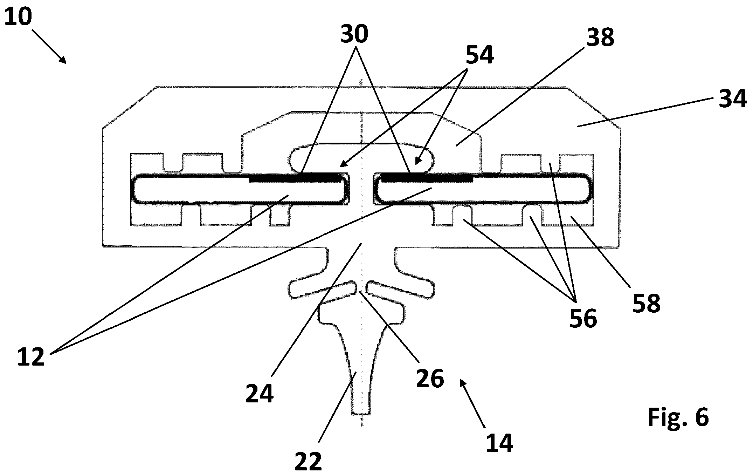

In Figur 6 ist ein weiteres Ausführungsbeispiel der Erfindung gezeigt. Die Wischleiste 14 umfasst die Wischlippe 24 die über den Kippsteg 26 mit dem Befestigungsbereich 24 verbunden ist. der Befestigungsbereich 24 weist 2 Befestigungsnuten 54 auf in die jeweils ein Teil der zweiteiligen Federschiene 12 eingeführt ist, so dass der Befestigungsbereich 24 der Wischleiste 14 sicher gehaltert ist. In dem in die Befestigungsnuten 54 eingeführten Bereich ist zumindest teilweise die Heizeinrichtung 30 an der Federschiene angeordnet. Einstückig mit dem Befestigungsbereich 24 ist das Isolierelement 34 ausgebildet, welches den Befestigungsbereich 24 in Bereich der Federschiene 12 im Wesentlichen vollständig umschließt. Dadurch ist eine Luftkammer 38 zumindest im Bereich des Befestigungsbereichs 24 gebildet. Zur weiteren Verbesserung der Isolierung sind Stützstreben 56 im Isolierelement 34 vorgesehen, die mit der Federschiene 12 stützend in Kontakt sind, so dass weitere Luftkammern 58 gebildet sind. Die Stützstreben 56 sind hierbei sowohl auf der, der Wischlippe 22 zugewandten Unterseite der Federschiene 12 wie auch auf der Oberseite der Federschiene 12 angeordnet.

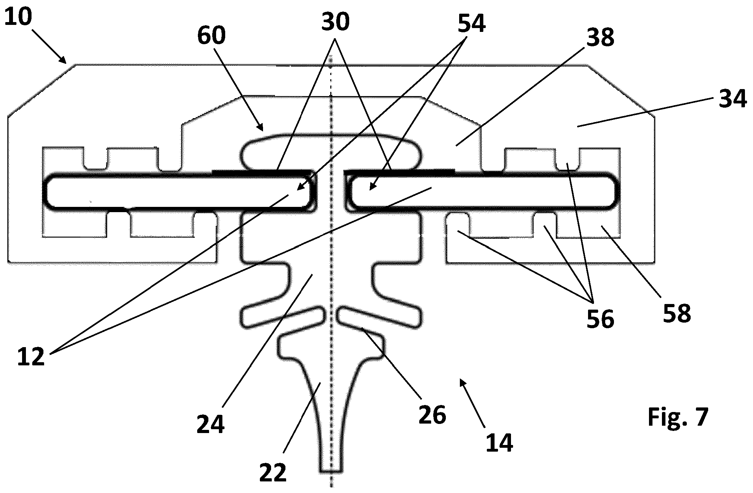

In Figur 7 ist eine Variation des in Figur 6 gezeigten Ausführungsbeispiels dargestellt. Die Wischleiste 14 weist in ihrem Befestigungsbereich 24 die beiden Befestigungsnuten 54 auf. In diese Befestigungsnuten ist jeweils ein Teil der zweiteiligen Federschiene 12 eingeführt, an der die Heizeinrichtung 30 angeordnet ist. Das Isolierelement 34 ist hier als separates Teil ausgebildet und umschließt die Federschiene 12 sowie teilweise den Befestigungsbereich 24 umgekehrt U-förmig. Das Isolierelement steht an den Stützstreben 56 mit der Oberseite und der Unterseite der Federschiene 12 in Kontakt. Dadurch sind die Luftkammer 38 sowie die weiteren Luftkammern 58 gebildet, die die Federschiene 12, die durch die Heizeinrichtung 30 erwärmt wird, bestmöglich isoliert ist.

Der Befestigungsbereich 24 ist hierbei separat vom Isolierelement 34 ausgebildet.

In einer Variation dieses Ausführungsbeispiels kann das Heizelement 30 auch auf der Unterseite, die der Wischlippe 22 zugewandt ist, des Tragelements 12 angeordnet sein. In einer weiteren Variation kann die Heizeinrichtung 30 auch am Befestigungsbereich 24 der Wischleiste angeordnet sein. So wird durch die Befestigungsnuten 54 ein T-förmiger Abschnitt 60 gebildet, auf dessen oberen Querbereich die Heizeinrichtung 30 angeordnet werden kann.

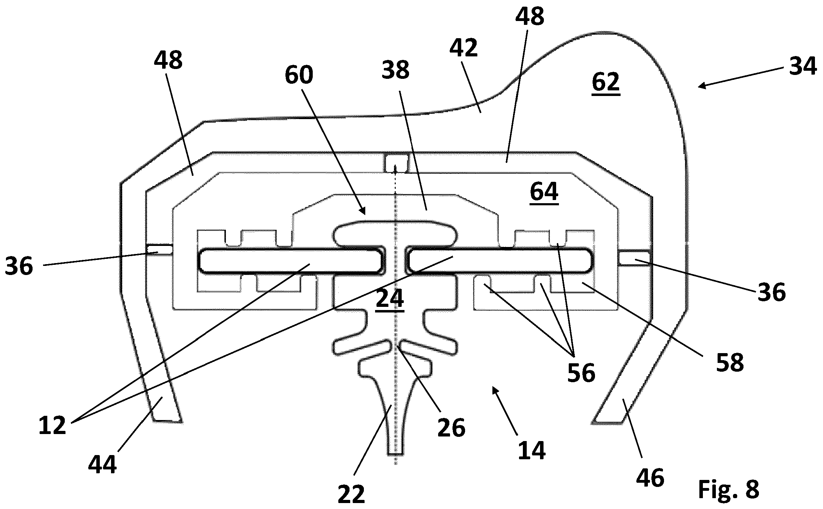

In Figur 8 ist eine Kombination der Ausführungsbeispiele aus Figur 7 und Figur 5 gezeigt. Wie im Ausführungsbeispiel von Figur 5 ist hier das Isolierelement 34 zweischalig aufgebaut und umfasst daher ein äußeres Isolierelement 62 sowie ein inneres Isolierelement 64. Das äußere Isolierelement 62 ist durch die Haltebrücken 36 am inneren Isolierelement 64 befestigt. Dadurch entstehen zwischen dem inneren Isolierelement 64 und dem äußeren Isolierelement 62 die Zusatzluftkammern 48. Das innere Isolierelement 64 ist identisch zu dem in Figur 7 gezeigten Isolierelement aufgebaut. Zur Vermeidung von Wiederholungen wird im Hinblick auf das innere Isolierelement auf die Ausführungen zur Figur 7 verwiesen.

Das äußere Isolierelement 62 ist ähnlich aufgebaut wie das in Figuren 4 und 5 gezeigte Isolierelement 34. Das äußere Isolierelement 62 west daher eine umgekehrte U-förmige Struktur auf und somit eine Basis 42 von der aus sich in Richtung der Wischlippe 22 die Schürze 44 und die weiter Schürze 46 erstrecken. Die Basis 42 dient hier gleichzeitig als Windabweisleiste 16 (Figur 1). Daher weist die Basis 42 eine Spoilerstruktur auf, wie sie aus dem Stand der Technik bereits bekannt ist.

Die Heizeinrichtung 30 ist aus Gründen der Übersichtlichkeit in Figur 8 nicht separat eingezeichnet. Die Heizeinrichtung 30 kann, sowie in Figur 7 gezeigt, an der Federschiene 12 im Bereich der Befestigungsnuten 54 angeordnet sein. Ebenso kann die Heizeinrichtung 30 am Befestigungsbereich 24 bspw. auf dem T-förmigen Abschnitt 60 vorgesehen sein.

In sämtlichen Ausführungsbeispielen ist das Isolierelement 34 aus einem elastischen Kunststoff hergestellt. Hierzu kann das Isolierelement 34 als Kunststoffspritzgussteil ausgebildet sein oder in einem Extrusionsverfahren hergestellt sein. In einer Variation der Erfindung kann die Schürze 44 und/oder die weitere Schürze 46 als zusätzliches Abstreifelement dienen, also bspw. Schnee oder größere Verschmutzungen, wie bspw. Gestüber oder Geschmeiß, von der Scheibe wischen, ehe die Reinigung durch die Wischlippe 22 endgültig vorgenommen wird. Die Schürze 44 so und/oder die weitere Schürze 46 sind in diesem Fall soweit nach unten, in Richtung der Scheibe bzw. in Richtung der Wischlippe 22 verlängert, dass sie im Betrieb entsprechend auf der Scheibe aufliegen.

Die Wischleiste 14 ist ebenso aus elastischen Kunststoff, insbesondere Gummi, mithin Naturkautschuk oder EPDM extrudiert oder gespritzt. Das gleiche gilt für die Zwischenschiene 47. Diese kann extrudiert oder in Spritzgussverfahren hergestellt sein.

## Patentansprüche

1. Wischblatt (10), insbesondere für ein Kraftfahrzeug, umfassend eine Wischleiste (14) mit einer Längserstreckung (L), die einen Befestigungsbereich und eine Wischlippe aufweist, die über einen Kippsteg verbunden sind, und eine Heizeinrichtung (30), wobei mindestens ein Isolierelement (34) zur Wärmeisolation vorgesehen ist, **dadurch gekennzeichnet, dass** das Isolierelement (34) eine etwa umgekehrt U-förmige Struktur aufweist, durch die eine Basis (42) ausgebildet ist, an deren Enden eine Schürze (44) und eine weitere Schürze (46) angeordnet ist, die ausgehend vom Befestigungsbereich (24) bis über einen Kippsteg (26) in den Bereich der Wischlippe (22) herabreichen, wobei das Isolierelement (34) durch mindestens eine Haltebrücke (36) befestigt ist und wobei die Wischleiste (14) mit der Wischlippe (22), dem Kippsteg (26) und dem Befestigungsbereich (24) einstückig mit den Haltebrücken (36) und dem Isolierelement (34) ausgebildet ist.

2. Wischblatt (10) nach einem der vorhergehenden Ansprüche, **dadurch gekennzeichnet, dass** die Isolierelement (34) im Querschnitt den Befestigungsbereich (24) und zumindest teilweise die Wischlippe (22) isoliert.

3. Wischblatt (10) nach einem der vorhergehenden Ansprüche, **dadurch gekennzeichnet, dass** die Wischleiste (14) an einer Federschiene (12) befestigt ist.

4. Wischblatt (10) nach einem der vorhergehenden Ansprüche, **dadurch gekennzeichnet, dass** die Federschiene (12) durch die Heizeinrichtung (30) beheizt ist.

5. Wischblatt (10) nach einem der vorhergehenden Ansprüche, **dadurch gekennzeichnet, dass** der Befestigungsbereich (24) durch die Heizeinrichtung (30) beheizt ist.

6. Wischblatt (10) nach einem der vorhergehenden Ansprüche, **dadurch gekennzeichnet, dass** das Isolierelement (34) mehrschalig ausgebildet ist.

## Claims

1. Wiper blade (10), in particular for a motor vehicle, comprising a wiper strip (14) with a longitudinal extent (L) that has a fastening region and a wiper lip which are connected via a tilting web, and comprising a heating device (30), wherein at least one insulating element (34) is provided for thermal insulation, **characterized in that** the insulating element (34) has an approximately upside-down-U-shaped structure, as a result of which there is formed a base (42), there being arranged at the ends of the latter a skirt (44) and a further skirt (46) which extend from the fastening region (24) down into the region of the wiper lip (22) via a tilting web (26), wherein the insulating element (34) is fastened by at least one holding bridge (36), and wherein the wiper strip (14), with the wiper lip (22), the tilting web (26) and the fastening region (24), is formed in one piece with the holding bridges (36) and the insulating element (34).

2. Wiper blade (10) according to one of the preceding claims, **characterized in that**, in cross section, the insulating element (34) insulates the fastening region (24) and, at least partially, the wiper lip (22).

3. Wiper blade (10) according to one of the preceding claims, **characterized in that** the wiper strip (14) is fastened to a spring rail (12).

4. Wiper blade (10) according to one of the preceding claims, **characterized in that** the spring rail (12) is heated by the heating device (30).

5. Wiper blade (10) according to one of the preceding claims, **characterized in that** the fastening region (24) is heated by the heating device (30).

6. Wiper blade (10) according to one of the preceding claims, **characterized in that** the insulating element (34) is of multi-shell form.

## Revendications

1. Balai d'essuie-glace (10), en particulier pour un véhicule automobile, comprenant une lame d'essuyage (14) présentant une étendue longitudinale (L), qui présente une zone de fixation et une lèvre d'essuyage, qui sont reliées par l'intermédiaire d'une bride de basculement, et un dispositif de chauffage (30), au moins un élément isolant (34) pour l'isolation thermique étant prévu, **caractérisé en ce que** l'élément isolant (34) présente environ une forme de U inversé qui forme une base (42) aux extrémités de laquelle sont agencées une bavette (44) et une autre bavette (46), qui, partant de la zone de fixation (24), s'étendent jusqu'à au-delà d'une bride de basculement (26) dans la zone de la lèvre d'essuyage (22), l'élément isolant (34) étant fixé par au moins un pont de maintien (36) et la lame d'essuyage (14) étant réalisée, avec la lèvre d'essuyage (22), la bride de basculement (26) et la zone de fixation (24), d'un seul tenant avec le pont de maintien (36) et l'élément isolant (34).

2. Balai d'essuie-glace (10) selon l'une des revendications précédentes, **caractérisé en ce que** l'élément isolant (34) isole, en coupe transversale, la zone de fixation (24) et au moins partiellement la lèvre d'essuyage (22).

3. Balai d'essuie-glace (10) selon l'une des revendications précédentes, **caractérisé en ce que** la lame d'essuyage (14) est fixée à un rail à ressort (12).

4. Balai d'essuie-glace (10) selon l'une quelconque des revendications précédentes, **caractérisé en ce que** le rail à ressort (12) est chauffé par le dispositif de chauffage (30).

5. Balai d'essuie-glace (10) selon l'une quelconque des revendications précédentes, **caractérisé en ce que** la zone de fixation (24) est chauffée par le dispositif de chauffage (30).

6. Balai d'essuie-glace (10) selon l'une quelconque des revendications précédentes, **caractérisé en ce que** l'élément isolant (34) est conçu de manière multicouche.
